# EUROPÄISCHE PATENTSCHRIFT

(11) **EP 4 481 354 B1**
(45) Veröffentlichungstag und Bekanntmachung des Hinweises auf die Patenterteilung: **17.12.2025**
(21) Anmeldenummer: 24203662.2
(22) Anmeldetag: 30.09.2024
(51) Int. Cl.: G01M 3/20

(54) **VORRICHTUNG UND VERFAHREN ZUR LECKSUCHE**
LEAK DETECTION APPARATUS AND METHOD
DISPOSITIF ET PROCÉDÉ DE DÉTECTION DE FUITE

(30) Priorität: 29.11.2023 DE 102023133450
(43) Veröffentlichungstag der Anmeldung: 25.12.2024
(73) Patentinhaber: Pfeiffer Vacuum Technology AG, 35614 Asslar (DE)
(72) Erfinder: Schweighöfer, Michael, 35614 Schöffengrund (DE); Birkenfeld, Maximilian, 35649 Bischoffen (DE); Hofmann, Jan, 35305 Grünberg (DE)
(74) Vertreter: Manitz Finsterwald Patent- und Rechtsanwaltspartnerschaft mbB

(56) Entgegenhaltungen:
- EP-B1- 1 503 199
- US-A- 5 585 548

## Beschreibung

Die Erfindung betrifft eine Vorrichtung zur Lecksuche nach dem Vakuumverfahren im Gegenstromprinzip, mit einer Vakuumpumpeinheit, die an einen zu evakuierenden Prüfgegenstand anschließbar ist und die eine Turbovakuumpumpe mit einem Turbopumpabschnitt umfasst, der von einer oder mehreren Turbopumpstufen gebildet ist, und mit einem Detektor, insbesondere einem Massenspektrometer, zum Nachweisen eines Prüfgases, insbesondere Helium, wobei die Turbovakuumpumpe über zumindest einen axialen und/oder radialen Saugeinlass an den Detektor angeschlossen ist und stromabwärts des Saugeinlasses einen Prüfgaseinlass aufweist, und wobei sich in Pumprichtung der Turbovakuumpumpe zwischen dem Saugeinlass und dem Prüfgaseinlass zumindest ein Teil des Turbopumpabschnitts befindet.

Außerdem betrifft die Erfindung ein Verfahren zur Lecksuche nach dem Vakuumverfahren im Gegenstromprinzip mittels einer Lecksuchvorrichtung, die eine Vakuumpumpeinheit und einen Detektor umfasst, wobei die Vakuumpumpeinheit an einen zu evakuierenden Prüfgegenstand anschließbar ist und eine Turbovakuumpumpe mit einem Turbopumpabschnitt umfasst, der von einer oder mehreren Turbopumpstufen gebildet ist, insbesondere mittels einer Lecksuchvorrichtung wie hierin offenbart.

Der Wortbestandteil "Turbo..." wird zur Vereinfachung im Rahmen der vorliegenden Offenbarung als verkürzte Schreibweise für "Turbomolekular..." verwendet, d.h. wenn z.B. von einer Turbovakuumpumpe oder einer Turbopumpstufe die Rede ist, dann ist hierunter eine Turbomolekularpumpe bzw. eine Turbomolekularpumpstufe zu verstehen.

Das Konzept einer Lecksuche nach dem Vakuumverfahren im Gegenstromprinzip ist in der Vakuumtechnik grundsätzlich bekannt. Bei dem Prüfgegenstand handelt es sich entweder um die eigentlich zu prüfende, auch als "Prüfling" bezeichnete Komponente selbst, was voraussetzt, dass diese Komponente auf einen gewissen Vakuumdruck evakuiert werden kann, oder es handelt sich bei dem Prüfgegenstand um eine Vakuumkammer, in welche die jeweils zu prüfende Komponente gelegt wird. In letzterem Fall wird dann nicht die Komponente selbst, sondern die Vakuumkammer evakuiert. In beiden Fällen wird mittels des Detektors das in das Vakuum gelangende Prüfgas nachgewiesen, genauer gesagt wird der Prüfgasstrom gemessen und beispielsweise als eine sogenannte Leckrate angezeigt.

Unterschiedliche Leckdetektoren, insbesondere Heliumleckdetektoren, sind dem Fachmann grundsätzlich bekannt. Auch das hier in Rede stehende Gegenstromprinzip und die hierfür eingesetzten Gegenstromleckdetektoren gehören auf dem Gebiet der Vakuumtechnik zum Fachwissen. Hierzu wird insbesondere auf die einschlägige Fachliteratur gemäß "Wutz Handbuch Vakuumtechnik (Hrsg. Karl Jousten)" 11. Auflage, Springer Vieweg und dort insbesondere auf die Kapitel 14.4. "Leckdetektoren", 19. "Lecksuchtechniken" sowie 19.4. "Lecksuchverfahren mit Heliumleckdetektoren" verwiesen.

Die EP1503199 zeigt ein Lecksuchverfahren und eine Lecksuchanordnung, wobei zur Erhöhung der Taktfrequenz eine Seite einer Molekularpumpe dazu verwendet wird, im Gegenstromprinzip das Prüfgas dem Gasdetektor zuzuführen, während die andere Seite lediglich zum Abpumpen dient. Grundsätzlich wird eine möglichst hohe Empfindlichkeit der Lecksuchvorrichtung angestrebt, d.h. bildlich gesprochen soll (pro Zeiteinheit) möglichst viel Prüfgas zum Detektor strömen können. Eine Anforderung an eine Lecksuchvorrichtung der hier in Rede stehenden Art ist daher eine möglichst große Prüfgasrückströmung durch den stromaufwärts des Prüfgaseinlasses gelegenen Teil des Turbopumpabschnitts. Im Regelbetrieb, also während der Lecksuche (hier auch als "Prüfmodus" der Lecksuchvorrichtung bezeichnet), ist daher grundsätzlich eine bezogen auf das Prüfgas relativ niedrige Kompression und ein relativ niedriges Saugvermögen des betreffenden Teils des Turbopumpabschnitts von Vorteil, solange dabei sichergestellt ist, dass die Turbovakuumpumpe im Prüfmodus den erforderlichen niedrigen Druck im Detektor aufrechterhalten kann.

Gleichzeitig ist aber zu beachten, dass es in der Praxis zu sogenannten "Prüfgasverseuchungen" des Detektors kommen kann, insbesondere bei relativ großen Lecks im Prüfgegenstand. Der Detektor muss dann zunächst evakuiert, d.h. das Prüfgas muss aus dem Detektor abgepumpt werden, um so den Detektor wieder für eine weitere Lecksuche betriebsbereit zu machen. Für diesen Abpumpprozess (hier auch als "Evakuiermodus" der Lecksuchvorrichtung bezeichnet) ist eine bezogen auf das Prüfgas hohe Kompression und ein hierdurch begünstigtes hohes Saugvermögen des Turbopumpabschnitts erstrebenswert.

Vor diesem Hintergrund bestehen also in der Praxis widersprüchliche Anforderungen an eine Lecksuchvorrichtung und insbesondere an den Turbopumpabschnitt der Turbovakuumpumpe. Ein im Fall einer Prüfgasverseuchung vorteilhafter, auf ein hohes Saugvermögen und eine hohe Kompression hin optimierter Turbopumpabschnitt ermöglicht nämlich nur eine vergleichsweise geringe Prüfgasrückströmung und steht damit dem Erfordernis einer möglichst hohen Prüfgasempfindlichkeit des Detektors während des Prüfmodus, also im Regelbetrieb, entgegen.

Aufgabe der Erfindung ist es daher, eine Möglichkeit zu schaffen, im Regelbetrieb eine möglichst hohe Prüfgasempfindlichkeit zu ermöglichen und im Falle einer Prüfgasverseuchung den Detektor möglichst schnell evakuieren zu können.

Die Lösung dieser Aufgabe erfolgt jeweils durch die Merkmale der unabhängigen Ansprüche.

Die erfindungsgemäße Lecksuchvorrichtung zeichnet sich dadurch aus, dass zumindest ein Bypass für das Prüfgas vorgesehen ist, der von einem in Höhe des Prüfgaseinlasses oder stromaufwärts des Prüfgaseinlasses gelegenen Bypassaustritt aus dem Turbopumpabschnitt direkt in den Detektor oder zu einem stromaufwärts des Bypassaustritts gelegenen Bypasseintritt in den Turbopumpabschnitt führt und der dabei zumindest einen Teil des Turbopumpabschnitts umgeht.

Vorzugsweise ist eine Einstelleinrichtung zum Ändern des auf das Prüfgas bezogenen Leitwertes des Bypasses vorgesehen, wobei die Einstelleinrichtung mittels einer Steuereinrichtung der Vorrichtung ansteuerbar ist, um in Abhängigkeit von den Betriebsbedingungen der Vorrichtung den Leitwert zwischen einem relativ höheren Wert und einem relativ niedrigeren Wert zu verändern.

Das erfindungsgemäße Verfahren zur Lecksuche zeichnet sich dadurch aus, dass für ein vom Prüfgegenstand stammendes, in die Turbovakuumpumpe gelangendes und entgegen der Pumprichtung zum Detektor strömendes Prüfgas zumindest ein Bypass bereitgestellt wird, der unter Umgehung zumindest eines Teils des Turbopumpabschnitts entweder direkt in den Detektor oder zurück in den Turbopumpabschnitt führt.

Vorzugsweise wird der auf das Prüfgas bezogene Leitwert des Bypasses während des Betriebs der Lecksuchvorrichtung von einem relativ höheren Wert für einen Prüfmodus, in welchem das Prüfgas mittels des Detektors nachgewiesen wird, auf einen relativ niedrigeren Wert für einen Evakuiermodus geändert wird, in welchem der Detektor evakuiert wird.

Der Bypass ermöglicht es, dass das Prüfgas zumindest einen Teil des Turbopumpabschnitts umgehen kann. Zumindest dieser Teil des Turbopumpabschnitts kann folglich auf eine möglichst hohe Kompression und ein möglichst hohes Saugvermögen hin optimiert werden, ohne dass dies im Regelbetrieb die Empfindlichkeit des Detektors für das Prüfgas beeinträchtigt. Bei einer Prüfgasverseuchung wirkt sich dann die relativ hohe Kompression und das hierdurch begünstigte hohe Saugvermögen dahingehend vorteilhaft aus, dass das Prüfgas vergleichsweise schnell aus dem Detektor abgepumpt werden kann.

Für diesen hierin auch als Evakuiermodus bezeichneten Betrieb ist es möglich, aber nicht zwingend, dass der Leitwert des Bypasses reduziert wird, also auf den relativ niedrigeren Wert gebracht wird.

Es wurde gefunden, dass es möglich ist, einen Bypass für das Prüfgas zu realisieren, dessen auf das Prüfgas bezogener Leitwert für den Evakuiermodus nicht reduziert zu werden braucht. Der Leitwert des Bypasses kann unverändert bleiben, ohne dass es im Evakuiermodus zu einem nachteiligen "Kurzschluss-Effekt" kommt, d.h. ohne dass aus dem Detektor abgepumptes Prüfgas in einem nachteiligen Ausmaß über den Bypass zurück in den Detektor gelangt. Ein solcher, insofern passiver Bypass, also ein Bypass, dessen auf das Prüfgas bezogener Leitwert nicht veränderbar ist oder nicht verändert wird, kann zum Beispiel eine Kapillare oder eine Selektionseinrichtung wie z.B. eine Selektionsmembran umfassen. Eine Gasleitung in Form einer solchen Kapillare besitzt für leichte Gase, insbesondere Helium, einen höheren Leitwert als für schwere Gase, insbesondere Stickstoff bzw. Luft, bzw. eine solche Selektionsmembran ist für das Prüfgas, insbesondere Helium, passierbar, nicht jedoch für ein Fremdgas, das schwerer ist als das Prüfgas, insbesondere Stickstoff.

Das erfindungsgemäße Bypass-Konzept wird somit den eingangs erläuterten, einander entgegenstehenden Anforderungen an eine Lecksuchvorrichtung gerecht. Es werden gleichzeitig eine hohe Prüfgasempfindlichkeit des Detektors im Regelbetrieb und eine schnelle Wiederherstellung der Betriebsbereitschaft des Detektors im Falle einer Prüfgasverseuchung des Detektors erreicht.

Ob während des Regelbetriebs das Prüfgas über den Bypass direkt in den Detektor oder zunächst wieder zurück in den Turbopumpabschnitt gelangt, hängt insbesondere von der konkreten Ausgestaltung der Turbovakuumpumpe und/oder der Anordnung der Turbovakuumpumpe relativ zum Detektor ab. Hierauf wird an anderer Stelle auch in Verbindung mit den in der Zeichnung dargestellten Ausführungsbeispielen näher eingegangen. Wenn die Turbovakuumpumpe für den Detektor lediglich einen axialen Saugeinlass aufweist, kann beispielsweise ein radialer Bypassaustritt zwischen zwei Turbopumpstufen liegen und der Bypass direkt in den Detektor führen. Wenn eine Vakuumpumpe derart ausgebildet und angeordnet ist, dass sie für den Detektor entweder mehrere radiale Saugeinlässe oder einen axialen Saugeinlass und zumindest einen radialen Saugeinlass aufweist, dann kann der Bypass das Prüfgas nach Umgehung eines Teils des Turbopumpabschnitts wieder zurück in den Turbopumpabschnitt führen, von wo das Prüfgas dann in den Detektor gelangt.

**In** beiden Fällen kann die Turbovakuumpumpe jeweils als sogenannte Splitflow-Vakuumpumpe ausgebildet sein. Radiale Saugeinlässe der Splitflow-Vakuumpumpe können mit Auslässen einer Ventileinheit der Vakuumpumpeinheit verbunden sein, wie an anderer Stelle offenbart, und zwar unabhängig davon, ob die Splitflow-Vakuumpumpe mit einem oder mehreren radialen Saugeinlässen an den Detektor angeschlossen ist oder lediglich mit einem axialen Saugeinlass.

Die Bezeichnungen "stromabwärts" und "stromaufwärts", die hier insbesondere im Verbindung mit der Lage des Prüfgaseinlasses, des Bypassaustritts und des Bypasseintritts sowie mit der Lage von Turbopumpstufen verwendet werden, beziehen sich im Rahmen der vorliegenden Offenbarung, sofern nichts anderes angegeben ist, auf die Pumprichtung der Turbovakuumpumpe der Vakuumpumpeinheit und damit auf die Drehachse eines Rotors der Turbovakuumpumpe.

Die Bezeichnung "direkt in den Detektor" bezieht sich darauf, dass der Bypass nicht zurück in den Turbopumpabschnitt geführt wird. Dies schließt nicht aus, dass in einigen möglichen Ausführungsbeispielen der Bypass vor seiner Mündung in den Detektor durch eine oder mehrere weitere Einrichtungen hindurch führen kann oder in eine dem Detektor vorgelagerte Einrichtung, z.B. eine Kammer eines Gehäuses des Lecksuchvorrichtung, hinein führen kann, von wo aus das Prüfgas dann in den Detektor gelangt.

Weitere mögliche Ausgestaltungen der Erfindung sind auch in den abhängigen Ansprüchen, der Beschreibung sowie der Zeichnung angegeben.

Es können zumindest zwei Bypässe für das Prüfgas vorgesehen sein. Die Bypässe können an unterschiedlichen Stellen aus dem Turbopumpabschnitt austreten und/oder an unterschiedlichen Stellen direkt in den Detektor oder zunächst zurück in den Turbopumpabschnitt führen. Durch einen oder mehrere weitere Bypässe kann die Empfindlichkeit des Detektors weiter erhöht werden.

Die mehreren Bypässe können derart ausgelegt sein, dass Teile des Turbopumpabschnitts mit unterschiedlich hoher Kompression und/oder unterschiedlich hohem Saugvermögen umgangen werden.

Ferner kann vorgesehen sein, wenn eine Einstelleinrichtung vorgesehen ist, dass die Leitwerte der Bypässe unabhängig voneinander veränderbar sind.

Der Turbopumpabschnitt umfasst vorzugsweise mehrere in Pumprichtung aufeinanderfolgend angeordnete Turbopumpstufen. Insgesamt umfasst der Turbopumpabschnitt eine Vielzahl abwechselnd angeordneter Rotor- und Statorscheiben, die mit vorgegebenen axialen Abständen angeordnet sind, wobei sich "axial" auf die Drehachse eines mit den Rotorscheiben verbundenen Rotors der Turbovakuumpumpe und damit auf deren Pumprichtung bezieht. Man spricht von einzelnen Turbopumpstufen, wenn sich diese dadurch voneinander abgrenzen lassen, dass der axiale Abstand zwischen zwei Turbopumpstufen größer ist als der axiale Abstand der Rotorscheiben bzw. Statorscheiben untereinander innerhalb einer jeweilige Turbopumpstufe.

Was die Lage des Prüfgaseinlasses angeht, so kann vorgesehen sein, dass der Prüfgaseinlass in Höhe einer Turbopumpstufe oder stromabwärts einer Turbopumpstufe, insbesondere zwischen zwei Turbopumpstufen gelegen ist. Es kann alternativ vorgesehen sein, dass der Prüfgaseinlass eine axiale Abmessung derart aufweist, dass der Prüfgaseinlass nicht nur einen Zwischenraum zwischen zwei Turbopumpstufen abdeckt, sondern zusätzlich einen Teil einer der beiden den Zwischenraum begrenzenden Turbopumpstufen oder jeweils einen Teil beider den Zwischenraum begrenzenden Turbopumpstufen abdeckt.

Was die Lage des Bypassaustritts angeht, so kann vorgesehen sein, dass der Bypassaustritt in Höhe einer Turbopumpstufe oder stromabwärts einer Turbopumpstufe, insbesondere zwischen zwei Turbopumpstufen, gelegen ist. Es ist also nicht zwingend, dass sich der Bypassaustritt in Höhe eines axialen Zwischenraums zwischen zwei aufeinanderfolgenden Turbopumpstufen angeordnet ist. Der Bypassaustritt kann auch in Höhe einer der Turbopumpstufen gelegen sein. Es kann alternativ vorgesehen sein, dass der Bypassaustritt eine axiale Abmessung derart aufweist, dass der Bypassaustritt nicht nur einen Zwischenraum zwischen zwei Turbopumpstufen abdeckt, sondern zusätzlich einen Teil einer der beiden den Zwischenraum begrenzenden Turbopumpstufen oder jeweils einen Teil beider den Zwischenraum begrenzenden Turbopumpstufen abdeckt.

Gemäß einigen Ausführungsbeispielen kann vorgesehen sein, dass der Prüfgaseinlass und der Bypassaustritt axial zumindest im Wesentlichen in gleicher Höhe gelegen sind, insbesondere zwischen zwei Turbopumpstufen, so dass zwischen der axialen Höhe des Prüfgaseinlasses und der axialen Höhe des Bypassaustritts sich kein Teil des Turbopumpabschnitts befindet. Das Prüfgas gelangt hierbei in den Bypass, ohne zuvor einen Teil des Turbopumpabschnitts durchströmt zu haben. Der Bypass kann hier insbesondere eine Kapillare und/oder eine Selektionseinrichtung, insbesondere eine Selektionsmembran, umfassen, wie hierin an anderer Stelle beschrieben. Insbesondere kann der Bypass insofern passiv sein, als keine Einstelleinrichtung zum Ändern des auf das Prüfgas bezogenen Leitwertes des Bypasses vorgesehen ist, was z.B. mit einer Kapillare oder eine Selektionseinrichtung, wie hierin beschrieben, realisiert werden kann.

Was die Lage des Bypasseintritts angeht, also für den Fall, dass der Bypass nicht direkt in den Detektor führt, so kann vorgesehen sein, dass der Bypasseintritt in Höhe einer Turbopumpstufe oder zwischen zwei Turbopumpstufen gelegen ist. Es kann alternativ vorgesehen sein, dass der Bypasseintritt eine axiale Abmessung derart aufweist, dass der Bypasseintritt nicht nur einen Zwischenraum zwischen zwei Turbopumpstufen abdeckt, sondern zusätzlich einen Teil einer der beiden den Zwischenraum begrenzenden Turbopumpstufen oder jeweils einen Teil beider den Zwischenraum begrenzenden Turbopumpstufen abdeckt.

Generell kann vorgesehen sein, dass der zwischen dem Bypassaustritt und dem Bypasseintritt gelegene Teil des Turbopumpabschnitts zur Erzielung einer höheren Kompression und/oder eines höheren Saugvermögens ausgelegt ist als ein stromaufwärts des Bypasseintritts gelegener Teil des Turbopumpabschnitts. Dies kann durch eine höhere Anzahl an Turbopumpstufen bzw. eine höherer Anzahl an pumpwirksam zusammenwirkender Rotor- und Statorscheiben erreicht werden. Der zwischen Bypassaustritt und Bypasseintritt gelegene Teil des Turbopumpabschnitts ist derjenige Teil, der von dem Bypass umgangen wird, der also während des Regelbetriebs nicht von dem Prüfgas durchströmt werden muss. Zumindest ein Teil dieses Teils des Turbopumpabschnitts kann auf eine möglichst hohe Kompression und/oder ein möglichst hohes Saugvermögen hin optimiert werden, um so in einem Evakuiermodus im Fall einer Prüfgasverseuchung des Detektors diesen möglichst schnell evakuieren zu können.

Gemäß einigen Ausführungsbeispielen kann vorgesehen sein, dass die Turbovakuumpumpe ausschließlich über einen axialen Saugeinlass an dem Detektor angeschlossen ist, wobei der Bypass von einem Bypassaustritt, der in Höhe einer Turbopumpstufe oder zwischen zwei Turbopumpstufen gelegen ist, direkt in den Detektor führt. Der gesamte Teil des Turbopumpabschnitts, der stromaufwärts des Bypassaustritts liegt, wird auf diese Weise also umgangen.

**In** alternativen Ausführungsbeispielen kann vorgesehen sein, dass die Turbovakuumpumpe über mehrere in Pumprichtung beabstandete radiale Saugeinlässe oder die über einen axialen Saugeinlass und einen oder mehrere in Pumprichtung beabstandete radiale Saugeinlässe an dem Detektor angeschlossen ist, wobei insbesondere der Bypasseintritt in Höhe einer Turbopumpstufe oder zwischen zwei Turbopumpstufen gelegen ist. Hierbei wird ein Teil des stromaufwärts des Bypassaustritts gelegenen Turbopumpabschnitts umgangen, d.h. das Prüfgas gelangt zurück in den Turbopumpabschnitt, bevor es zum Detektor gelangt.

Alternativ oder zusätzlich kann grundsätzlich auch bei Turbovakuumpumpe, die mit einem oder mehreren radialen Saugeinlässen an den Detektor angeschlossen ist, vorgesehen sein, dass der Bypass nicht zurück in den Turbopumpabschnitt, sondern direkt in den Detektor oder oberhalb der am weitesten stromaufwärts gelegenen Turbopumpstufe in ein Gehäuse führt, an welches der Detektor angeschlossen ist. Es ist auch möglich, dass zwei oder mehr Bypässe vorgesehen sind, wobei ein oder mehrere Bypässe jeweils zurück in den Turbopumpabschnitt und ein oder mehrere weitere Bypässe direkt in den Detektor führen. Die Bypassaustritte der Bypässe können, müssen dabei aber nicht auf gleicher axialer Höhe liegen, und die Bypassaustritte können, müssen aber nicht die gleiche Umfangsposition bezüglich der Drehachse eines Rotors der Vakuumpumpe besitzen.

Des Weiteren kann vorgesehen sein, dass ein zwischen dem Bypassaustritt und einem dem Bypassaustritt stromaufwärts am nächsten gelegenen radialen Saugeinlass befindlicher Teil des Turboabschnitts zur Erzielung einer höheren Kompression und/oder eines höheren Saugvermögens ausgelegt ist, als jeder weiter stromaufwärts gelegene Teil des Turbopumpabschnitts, der entweder zwischen dem dem Bypassaustritt stromaufwärts am nächsten gelegenen radialen Saugeinlass und dem Bypasseintritt oder stromaufwärts des Bypasseintritts gelegen ist.

Beispielsweise kann die Turbovakuumpumpe stromaufwärts des Prüfgaseinlasses drei Turbopumpstufen aufweisen, wobei in Pumprichtung gesehen ein Saugeinlass, eine erste Turbopumpstufe, der Bypasseintritt, eine zweite Turbopumpstufe, ein weiterer Saugeinlass, eine dritte Turbopumpstufe und der Prüfgaseinlass axial aufeinanderfolgend angeordnet sind. Beispielsweise können die dritte und die zweite Turbopumpstufe von dem Bypass umgangen werden. Zumindest die dritte Turbopumpstufe, die unmittelbar stromaufwärts des Prüfgaseinlasses liegt, kann zur Erzielung einer höheren Kompression und/oder eines höheren Saugvermögens ausgelegt werden als die erste Turbopumpstufe und die zweite Turbopumpstufe.

Diese Ausgestaltung, die nachstehend auch anhand eines Ausführungsbeispiels erläutert wird, stellt nur ein Beispiel für eine mögliche Auslegung einer erfindungsgemäßen Vakuumpumpeinheit dar. Die konkrete Ausgestaltung kann in Abhängigkeit von den jeweiligen Anforderungen gewählt werden.

Der Bypass selbst und dessen Einstelleinrichtung, wenn eine solche vorhanden ist, kann grundsätzlich in unterschiedlicher Art und Weise ausgelegt werden. Es existieren vielfältige Möglichkeiten, den auf das jeweilige Prüfgas bezogenen Leitwert des Bypasses zu verändern, wenn ein solches Verändern des Leitwerts in einem jeweiligen Ausführungsbeispiel der Erfindung vorgesehen ist.

Generell ist es beim Vorsehen einer Einstelleinrichtung möglich, aber nicht zwingend, dass für einen Evakuiermodus, in welchem bei einer Prüfgasverseuchung der Detektor evakuiert werden soll, den Leitwert des Bypasses auf Null zu reduzieren. Der Leitwert kann also während eines Evakuiermodus entweder auf Null reduziert oder größer als Null sein.

In einigen Ausführungsbeispielen kann vorgesehen sein, dass der Bypass zumindest eine Gasleitung umfasst und eine Einstelleinrichtung wenigstens ein mittels der Steuereinrichtung ansteuerbares Bypass-Ventil aufweist. Bei dem Bypass-Ventil kann es sich beispielsweise um ein Magnetventil handeln. Mittels der Steuereinrichtung kann der Strömungsquerschnitt des Bypass-Ventils verändert werden, z.B. stufenlos oder in Stufen. Bei dem Bypass-Ventil kann es sich alternativ um ein reines Schaltventil handeln, dass nur zwischen zwei Stellungen umgeschaltet werden kann, insbesondere einer vollständig offenen und einer vollständig geschlossenen Stellung.

Als ein Aktor für ein wie auch immer ausgebildetes Ventil kann zum Beispiel eine Rollmembran eingesetzt werden. Eine solche Rollmembran kann auch als Aktor für eine Blende oder einen Schieber zum Verändern des Strömungsquerschnitts einer Bypass-Gasleitung eingesetzt werden.

Das Bypass-Ventil kann in der Gasleitung, in der Turbovakuumpumpe, insbesondere an oder in einem Pumpengehäuse, oder in einer der Turbovakuumpumpe zugeordneten Ventileinheit angeordnet sein. Beispielsweise kann das Bypass-Ventil direkt am Bypassaustritt aus dem Turbopumpabschnitt angeordnet sein. Bei der im Zusammenhang mit einer dieser Varianten erwähnten Ventileinheit handelt es sich um eine dem Fachmann hinsichtlich Aufbau und Funktion grundsätzlich bekannte Baugruppe einer Lecksuchvorrichtung. Die auch als Ventilblock bezeichnete Ventileinheit kann zwischen den Einlass für den zu evakuierenden Prüfgegenstand und den Prüfgaseinlass der Turbovakuumpumpe geschaltet und zudem mit einer Vorpumpe für die Turbovakuumpumpe verbunden sein. Mit der Ventileinheit kann in dem Fachmann bekannter Weise die Empfindlichkeit der Lecksuchvorrichtung eingestellt werden, indem je nach Schaltung der einzelnen Ventile der Ventileinheit eine andere Kompression der Turbovakuumpumpe abgegriffen wird.

In alternativen Ausgestaltungen kann der Bypass eine Gasleitung, insbesondere ohne Ventil, umfassen. Bei der Gasleitung kann es sich insbesondere um eine Kapillare handeln. Eine solche Gasleitung besitzt für leichte Gase einen höheren Leitwert als für schwere Gase. Insbesondere kann für den Bypass eine Gasleitung eingesetzt werden, die für Helium einen höheren Leitwert besitzt als für Stickstoff bzw. Luft. Um gemäß möglicher Weiterbildungen der Erfindung den auf das Prüfgas bezogenen Leitwert der Gasleitung zu verändern, kann eine mittels der Steuereinrichtung ansteuerbare Heizeinrichtung für die Gasleitung vorgesehen sein, deren Heizleistung zum Verändern des Leitwertes der Gasleitung veränderbar ist. Hierdurch kann der Umstand ausgenutzt werden, dass für entsprechende Gasleitungen, insbesondere Kapillare, eine gasspezifische Temperaturabhängigkeit des Leitwertes besteht.

Gemäß weiterer alternativer Ausgestaltungen kann vorgesehen sein, dass der Bypass eine Gasleitung, insbesondere ohne Ventil, umfasst und eine Selektionseinrichtung vorgesehen ist, insbesondere eine sogenannte Selektionsmembran, die für das Prüfgas passierbar ist, nicht jedoch für ein Fremdgas, das schwerer ist als das Prüfgas, insbesondere Stickstoff. Wenn eine derartige Selektionseinrichtung vorgesehen ist, beispielsweise am Bypassaustritt aus dem Turbopumpabschnitt, dann ist der Leitwert der Gasleitung für das Prüfgas relativ hoch. Während des Prüfmodus, also im Regelbetrieb, kann dann das Prüfgas durch den Bypass strömen, nicht jedoch schwerere Gase.

Die Selektionseinrichtung kann in der Gasleitung, in der Turbovakuumpumpe, insbesondere an oder in einem Pumpengehäuse, oder in einer der Turbovakuumpumpe zugeordneten Ventileinheit angeordnet sein.

Bei solchen Ausführungsbeispielen des erfindungsgemäßen Verfahrens, bei denen eine Leitwertveränderung des Bypasses erfolgt, ist insbesondere vorgesehen, dass nach dem Evakuieren des Detektors der Leitwert des Bypasses wieder zurück auf einen relativ höheren Wert geändert wird, um die Lecksuchvorrichtung wieder im Prüfmodus betreiben zu können.

Es ist also grundsätzlich möglich, die Lecksuchvorrichtung dauerhaft auch bei zwischenzeitlich auftretenden Prüfgasverseuchungen zu betreiben, indem der Leitwert des Bypasses jeweils entsprechend angepasst wird.

Eine Prüfgasverseuchung im Detektor kann durch eine entsprechende Druckmessung im Detektor erkannt werden. Es kann dann automatisch mittels der Steuereinrichtung von dem Prüfmodus in den Evakuiermodus gewechselt werden, wenn der gemessene Gasdruck innerhalb des Detektors einen vorgegebenen Wert übersteigt.

In einigen Ausführungsformen kann vorgesehen sein, dass der Leitwert des Bypasses durch Verändern des Strömungsquerschnitts eines Bypass-Ventils verändert wird.

In weiteren alternativen Ausgestaltungen kann der Leitwert des Bypasses durch Erwärmen und Kühlen einer Gasleitung für das Prüfgas verändert werden, insbesondere einer Kapillare.

Gemäß einem nicht beanspruchten Aspekt, besitzt die Lecksuchvorrichtung einen Prüfgaskanal, der direkt in den Detektor führt. Hierbei ist unter "direkt in den Detektor" zu verstehen, dass kein Teil eines Pumpabschnitts einer Vakuumpumpe vom Prüfgas entgegen der Pumprichtung durchströmt wird. Insbesondere erfolgt keine Rückströmung von Prüfgas

durch einen Turbopumpabschnitt. Ein Evakuieren des Detektors mittels einer wie auch immer gearteten Vakuumpumpe, insbesondere der Turbovakuumpupe wie hierin offenbart, einerseits und ein Zuführen des Prüfgases in den Detektor andererseits erfolgen dann gewissermaßen auf getrennten Strömungswegen. Zum Beispiel kann das Prüfgas von einer wie hierin beschriebenen Ventileinheit direkt zum Detektor geleitet werden. Durch geeignete Mittel kann sichergestellt werden, dass keine Fremdgase wie z.B. Stickstoff oder Luft in den Detektor gelangen, bzw. dass nur ein für den jeweiligen Detektor akzeptierbar geringer Fremdgasanteil über den Prüfgaskanal in den Detektor gelangt. Die geeigneten Mittel können z.B. eine Kapillare und/eine Selektionseinrichtung wie z.B. eine Selektionsmembran umfassen, wie hierin an anderer Stelle offenbart. Eine Vakuumpumpe zum Evakuieren des Detektors, insbesondere die Turbovakuumpumpe wie hierin offenbart, kann dann ohne Prüfgaseinlass ausgebildet oder mit einem verschließbaren Prüfgaseinlass versehen sein.

Die Erfindung wird im Folgenden beispielhaft unter Bezugnahme auf die Zeichnung beschrieben. Es zeigen:
- Fig. 1: schematisch eine erfindungsgemäße Lecksucheinrichtung mit angeschlossenem Prüfgegenstand gemäß einem ersten Ausführungsbeispiel der Erfindung, bei dem die Turbovakuumpumpe ausschließlich über einen axialen Saugeinlass an den Detektor angeschlossen ist, und
- Fig.2: eine Ansicht entsprechend Fig. 1 eines alternativen Ausführungsbeispiels der Erfindung, bei dem die Turbovakuumpumpe über einen axialen und einen radialen Saugeinlass an den Detektor angeschlossen.

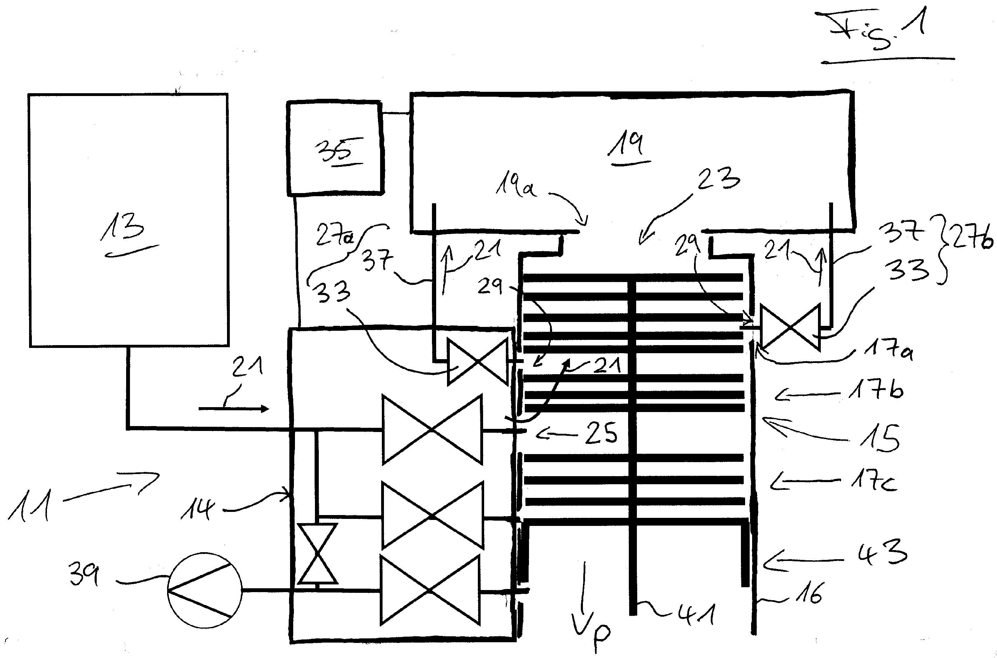

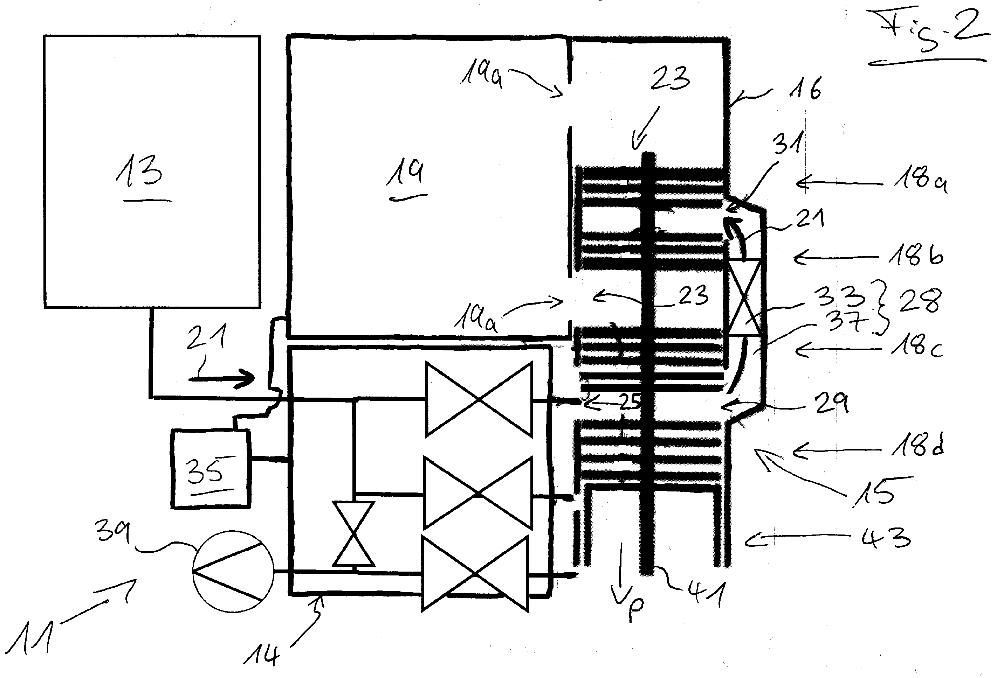

Die in den Fig. 1 und 2 dargestellten Lecksuchvorrichtungen umfassen jeweils eine Vakuumpumpeinheit 11 mit einer Turbomolekularvakuumpumpe 15, einem Ventilblock 14 sowie einer Vorpumpe 39. Von den Vakuumpumpen 15 sind jeweils nur schematisch das Pumpengehäuse 16 und die rotierenden pumpwirksamen Komponenten samt Rotor 41 dargestellt. Auf die Unterschiede zwischen den beiden Vakuumpumpen 15 und deren Anordnung innerhalb der Vorrichtung wird nachstehend näher eingegangen.

Die Turbovakuumpumpe gemäß Fig. 1 ist eine Splitflow-Vakuumpumpe und umfasst zum Anschluss an einen Detektor 19 einen axialen Saugeinlass 23, an den sich in einer Pumprichtung P drei Turbopumpstufen 17a, 17b und 17c anschließen. An die letzte Turbopumpstufe 17c schließt sich eine Holweckpumpstufe 43 an.

Im Ausführungsbeispiel der Fig. 2 ist die Turbovakuumpumpe 15 ebenfalls eine Splitflow-Vakuumpumpe, die zum Anschluss an einen Detektor 19 einen axialen Saugeinlass 23 und stromabwärts davon einen radialen Saugeinlass 23 aufweist. Zwischen den beiden Saugeinlässen 23 befinden sich eine erste Turbopumpstufe 18a und eine zweite Turbopumpstufe 18b. Stromabwärts des radialen Saugeinlasses 23 besitzt die Vakuumpumpe 15 zwei weitere Turbopumpstufen 18c und 18d, an die sich eine Holweckpumpstufe 43 anschließt.

Die Turbovakuumpumpen 15 sind jeweils an den ebenfalls zur Lecksuchvorrichtung gehörenden Detektor 19 in Form eines Massenspektrometers angeschlossen. Beim Ausführungsbeispiel der Fig. 1 steht der Detektor 19 mit dem axialen Saugeinlass 23 über eine Öffnung 19a in Verbindung. Im Ausführungsbeispiel der Fig. 2 ist der Detektor 19 bezüglich der Vakuumpumpe 15 seitlich angeordnet. Das Pumpengehäuse 16 ist hier ein Außengehäuse, in das die Pumpe 15 samt einem Basisgehäuse eingeschoben ist und mit dem der Detektor 19 über jeweils einem der Saugeinlässe 23 zugeordnete Öffnungen 19a in Verbindung steht. Die in das Außengehäuse 16 eingeschobene Vakuumpumpe 15 kann beispielsweise eine sogenannte Cartridge-Vakuumpumpe sein.

Die Lecksuchvorrichtungen gemäß Fig. 1 und Fig. 2 umfassen des Weiteren jeweils eine Steuereinrichtung 35, die den Betrieb der Lecksuchvorrichtung steuert.

Während des Regelbetriebs (Prüfmodus) ist an die Vakuumpumpeinheit 11 der Prüfgegenstand 13 angeschlossen. Wie eingangs erläutert, kann der Prüfgegenstand 13 eine jeweils auf Vakuumdichtigkeit zu prüfende Komponente (Prüfling) oder eine Vakuumkammer sein, in der sich die zu prüfende Komponente befindet.

Für den Prüfmodus sind der Detektor 19 sowie der Prüfgegenstand 13 mittels der Vakuumpumpeinheit 11 auf einen ausreichend niedrigen Vakuumdruck evakuiert worden. Besitzt der Prüfling ein Leck, gelangt das in Fig. 1 und 2 jeweils durch Pfeile veranschaulichte Prüfgas 21, in den meisten Fällen Helium, über die Ventileinheit 14 zu einem Prüfgaseinlass 25 und somit in den Turbopumpabschnitt der Turbovakuumpumpe 15, der von den einzelnen Turbopumpstufen 17a bis 17c (Fig. 1) bzw. 18a bis 18d (Fig. 2) gebildet wird.

Wie an anderer Stelle erwähnt, kann mit der Ventileinheit 14 die Empfindlichkeit der Lecksuchvorrichtung eingestellt werden. Die einzelnen Ventile der Ventileinheit 14 sind mit in Pumprichtung P beabstandeten Ports der Turbovakuumpumpe 15 verbunden, so dass in Abhängigkeit von dem Ventilschaltzustand der Ventileinheit 14, der von der erwarteten Größe eines Lecks im zu prüfenden Gegenstand 13 gewühlt wird, eine jeweilige Kompression der Turbovakuumpumpe 15 abgegriffen wird. Bei einem relativ großen erwarteten Leck beispielsweise wird nur das unterste der drei Ventile der Ventileinheit 14 geöffnet.

Die Lecksuchvorrichtungen arbeiten jeweils nach dem sogenannten Gegenstromprinzip, d.h. das Prüfgas 21 gelangt entgegen der Pumprichtung P in den Detektor 19, um dort nachgewiesen zu werden. Erfindungsgemäß braucht dabei das Prüfgas 21 nicht den gesamten stromaufwärts des Prüfgaseinlasses 25 gelegenen Teil des Turbopumpabschnitts durchströmen, da zwei Bypässe 27a, 27b (Fig. 1) bzw. ein Bypass 28 (Fig. 2) vorgesehen sind bzw. ist, mit denen bzw. mit dem hier ein Teil des stromaufwärts des Prüfgaseinlasses 25 gelegenen Turbopumpabschnitts umgangen werden kann. Auf die diesbezüglichen Unterschiede zwischen den beiden Ausführungsbeispielen gemäß den Fig. 1 und 2 wird nachstehend näher eingegangen.

Im Ausführungsbeispiel der Fig. 1 sind für das durch den Turbopumpabschnitt zurückströmende Prüfgas 21 zwei Bypässe 27a, 27b vorgesehen, wobei alternativ auch nur ein einziger Bypass 27 vorgesehen sein kann oder auch mehr als zwei Bypässe 27 bereitgestellt werden können.

Beide Bypässe 27a, 27b umfassen jeweils eine Gasleitung 37, die von einem Bypassaustritt 29 aus dem Turbopumpabschnitt direkt in den Detektor 19 führen. Der Bypassaustritt 29 des in Fig. 1 links dargestellten Bypasses 27a befindet sich in axialer Richtung zwischen den beiden am weitesten stromaufwärts gelegenen Turbopumpstufen 17a und 17b. Der Bypassaustritt 29 des in Fig. 1 rechts dargestellten Bypasses 27b liegt axial in Höhe des dem axialen Saugeinlass 23 am nächsten gelegenen Turbopumpabschnitts 17a.

Beiden Gasleitungen 37 ist jeweils eine Einstelleinrichtung 33 in Form eines Bypass-Ventils 33 zugeordnet, bei dem es sich beispielsweise um ein Magnetventil handeln kann, das mittels der Steuereinrichtung 35 angesteuert werden kann. Beispielsweise kann die Steuereinrichtung 35 die Ventile 33 jeweils zwischen einem geöffneten Zustand und einem vollständig geschlossenen Zustand umschalten.

Während des Regelbetriebs zum Nachweisen von Prüfgas 21 mittels des Detektors 19 sind die Ventile 33 jeweils geöffnet, d.h. der auf das Prüfgas 21 bezogene Leitwert der Gasleitungen 37 befindet sich jeweils auf dem relativ höheren Wert. Das Prüfgas 21 kann dann - wie durch die Pfeile veranschaulicht - vom Prüfgaseinlass 25 in Gegenstromrichtung, also entgegengesetzt zur Pumprichtung **P,** durch den Turbopumpabschnitt strömen und zu den Bypassaustritten 29 gelangen, von wo aus das Prüfgas 21 dann über die Gasleitungen 37 direkt in den Detektor 19 geführt wird. Bei geöffneten Ventilen 33 besitzen die Gasleitungen 37 jeweils einen relativ hohen Leitwert für das Prüfgas 21, so dass durch den in Fig. 1 links dargestellten Bypass 27a die dem Saugeinlass 23 am nächsten gelegene erste Turbopumpstufe 17a vollständig und durch den in Fig. 1 rechts dargestellten Bypass 27b diese Turbopumpstufe 17a teilweise umgangen wird. Insgesamt ergibt sich hierdurch ein wesentlich höherer Prüfgasstrom im Detektor 19 als ohne Bypässe 27a, 27b, wodurch die Empfindlichkeit des Detektors 19 wesentlich gesteigert ist.

Wird beispielsweise aufgrund eines relativ großen Lecks im Prüfgegenstand 13 der Gasdruck des Prüfgases 21 im Detektor 19 zu hoch, was durch eine entsprechende Druckmessung im Detektor 19 festgestellt werden kann, so werden mittels der Steuereinrichtung 35 die Bypass-Ventile 33 geschlossen. Dies bedeutet eine Verringerung des auf das Prüfgas 21 bezogenen Leitwertes der Gasleitungen 37, so dass die Turbovakuumpumpe 15 den Detektor 19 vergleichsweise schnell evakuieren kann, ohne dass abgepumptes Prüfgas 21 zurück in den Detektor 19 gelangen kann.

Die Turbovakuumpumpe 15 kann folglich hinsichtlich Saugvermögen und Kompression derart ausgelegt werden, dass ein schnelles Evakuieren des Detektors 19 im Falle einer Prüfgasverseuchung oder in anderen Situationen möglich ist, ohne dass diese Eigenschaften der Turbovakuumpumpe 15 die Prüfgas-Empfindlichkeit des Detektors 19 beeinträchtigen würde, da während des Regelbetriebs aufgrund der Bypässe 27a, 27b ein Teil des Turbopumpabschnitts umgangen wird.

Beim Ausführungsbeispiel der Fig. 2 umfasst der Bypass 28 ebenfalls eine Gasleitung 37, in der ein Bypass-Ventil 33, beispielsweise in Form eines Magnetventils, angeordnet ist. Der Bypassaustritt 29 ist hier axial in Höhe desjenigen Zwischenraumes zwischen zwei Turbopumpstufen 18c, 18d angeordnet, in den der Prüfgaseinlass 25 mündet. Das Druckniveau am Prüfgaseinlass 25 kann in bestimmten Situationen vergleichsweise hoch sein, so dass es vorteilhaft sein kann, wenn im Regelbetrieb zumindest im Wesentlichen lediglich Prüfgas 21 über den Bypass 28 strömen kann. Der Bypass 28 kann dann zum Beispiel eine Kapillare und/oder eine Selektionseinrichtung, insbesondere eine Selektionsmembran, umfassen, wie an anderer Stelle beschrieben, um Prüfgas 21 passieren zu lassen, schwerere Fremdgase aber nicht.

Das Prüfgas 21 kann über den Bypass 28 die beiden ersten stromaufwärts des Prüfgaseinlasses 25 gelegenen Turbopumpstufen 18c und 18b umgehen und gelangt axial über den Bypasseintritt 31 zwischen der ersten Turbopumpstufe 18a und der zweiten Turbopumpstufe 18b zurück in den Turbopumpabschnitt. Von dort gelangt das Prüfgas 21 in den Detektor 19, wo es nachgewiesen wird. Alternativ kann der Bypasseintritt 31 auch stromaufwärts der ersten Turbopumpstufe 18a positioniert sein. Alternativ oder zusätzlich können die beiden ersten Turbopumpstufen 18a und 18b auch zu einer einzigen Turbopumpstufe zusammengefasst sein. Insofern sind die in Fig. 2 dargestellte Ausgestaltung der Vakuumpumpe 15 und die Positionierung des Bypasses 28 lediglich beispielhaft.

Durch den Bypass 28 wird insbesondere erreicht, dass die unmittelbar stromaufwärts des Prüfgaseinlasses 25 gelegene Turbopumpstufe 18c, die stromabwärts des radialen Saugeinlasses 23 der Vakuumpumpe 15 gelegen ist, durch eine größere Anzahl von Rotor- und Statorscheiben zur Erzielung einer höheren Kompression und eines höheren Saugvermögens ausgelegt werden kann als die beiden weiter stromaufwärts gelegenen Turbopumpstufen 18a und 18b. Eine relativ hohe Kompression und ein relativ hohes Saugvermögen der Turbopumpstufe 18c beeinträchtigt die Prüfgas-Empfindlichkeit des Detektors 19 nicht, da diese Turbopumpstufe 18c mittels des Bypasses 28 umgangen wird, sorgt aber im Evakuiermodus z.B. im Fall einer Prüfgasverseuchung des Detektors 19 dafür, dass dieser schnell evakuiert werden kann.

Für einen Evakuiermodus wird das Ventil 33 des Bypasses 28 mittels der Steuereinrichtung 35 geschlossen, so dass in diesem Betriebsmodus ein Zurückströmen von Prüfgas 21 durch die Gasleitung 37 des Bypasses 28 unterbunden ist.

Die vorstehend erläuterten Ausführungsbeispiele umfassen für den Bypass 28 jeweils eine Einstellvorrichtung, hier in Form eines Ventils 33. Wie im Einleitungsteil erwähnt, ist in anderen möglichen Ausführungsbeispielen der Erfindung für den Bypass keine Einstellvorrichtung zum Verändern des auf das Prüfgas bezogenen Leitwertes erforderlich.

### Bezugszeichenliste

- 11: Vakuumpumpeinheit
- 13: Prüfgegenstand
- 14: Ventileinheit
- 15: Turbovakuumpumpe
- 16: Pumpengehäuse
- 17, 18: Turbopumpstufen
- 19: Detektor
- 19a: Öffnung
- 21: Prüfgas
- 23: Saugeinlass
- 25: Prüfgaseinlass
- 27, 28: Bypass
- 29: Bypassaustritt
- 31: Bypasseintritt
- 33: Einstelleinrichtung, Bypass-Ventil
- 35: Steuereinrichtung
- 37: Gasleitung
- 39: Vorpumpe
- 41: Rotor
- 43: Holweckpumpstufe

- P: Pumprichtung

## Patentansprüche

1. Vorrichtung zur Lecksuche nach dem Vakuumverfahren im Gegenstromprinzip,
mit einer Vakuumpumpeinheit (11), die an einen zu evakuierenden Prüfgegenstand (13) anschließbar ist und die eine Turbovakuumpumpe (15) mit einem Turbopumpabschnitt umfasst, der von einer oder mehreren Turbopumpstufen (17; 18) gebildet ist, und
mit einem Detektor (19), insbesondere einem Massenspektrometer, zum Nachweisen eines Prüfgases (21), insbesondere Helium,
wobei die Turbovakuumpumpe (15) über zumindest einen axialen und/oder radialen Saugeinlass (23) an den Detektor (19) angeschlossen ist und stromabwärts des Saugeinlasses (23) einen Prüfgaseinlass (25) aufweist, und
wobei sich in Pumprichtung (P) der Turbovakuumpumpe (15) zwischen dem Saugeinlass (23) und dem Prüfgaseinlass (25) zumindest ein Teil des Turbopumpabschnitts befindet,
**dadurch gekennzeichnet,**
**dass** zumindest ein Bypass (27, 28) für das Prüfgas (21) vorgesehen ist, der von einem in Höhe des Prüfgaseinlasses (25) oder stromaufwärts des Prüfgaseinlasses (25) gelegenen Bypassaustritt (29) aus dem Turbopumpabschnitt direkt in den Detektor (19) oder zu einem stromaufwärts des Bypassaustritts (29) gelegenen Bypasseintritt (31) in den Turbopumpabschnitt führt und der dabei zumindest einen Teil (17a; 18b, 18c) des Turbopumpabschnitts umgeht.

2. Vorrichtung nach Anspruch 1, ferner umfassend eine Einstelleinrichtung (33) zum Ändern des auf das Prüfgas (21) bezogenen Leitwertes des Bypasses (27, 28), wobei die Einstelleinrichtung (33) mittels einer Steuereinrichtung (35) der Vorrichtung ansteuerbar ist, um in Abhängigkeit von den Betriebsbedingungen der Vorrichtung den Leitwert zwischen einem relativ höheren Wert und einem relativ niedrigeren Wert zu verändern.

3. Vorrichtung nach Anspruch 1 oder 2, wobei zumindest zwei Bypässe (27a, 27b) für das Prüfgas (21) vorgesehen sind, und wobei die Bypässe (27a, 27b) an unterschiedlichen Stellen aus dem Turbopumpabschnitt austreten und/oder an unterschiedlichen Stellen in den Detektor (19) oder in den Turbopumpabschnitt führen,
insbesondere wobei die Bypässe (27a, 27b) Teile des Turbopumpabschnitts umgehen, die zur Erzielung unterschiedlich hoher Kompressionen und/oder Saugvermögen ausgelegt sind, und/oder wobei die Leitwerte der Bypässe (27a, 27b) unabhängig voneinander veränderbar sind.

4. Vorrichtung nach einem der vorherigen Ansprüche, wobei der Turbopumpabschnitt mehrere in Pumprichtung (P) aufeinanderfolgend angeordnete Turbopumpstufen umfasst und der Prüfgaseinlass (25) stromabwärts einer Turbopumpstufe, insbesondere zwischen zwei Turbopumpstufen, gelegen ist, und/oder wobei der Turbopumpabschnitt mehrere in Pumprichtung (P) aufeinanderfolgend angeordnete Turbopumpstufen umfasst und der Bypassaustritt (29) in Höhe einer Turbopumpstufe oder stromabwärts einer Turbopumpstufe, insbesondere zwischen zwei Turbopumpstufen, gelegen ist.

5. Vorrichtung nach einem der vorherigen Ansprüche, wobei der Prüfgaseinlass (25) und der Bypassaustritt (29) axial zumindest im Wesentlichen in gleicher Höhe gelegen sind, insbesondere zwischen zwei Turbopumpstufen (18c, 18d), so dass zwischen der axialen Höhe des Prüfgaseinlasses (25) und der axialen Höhe des Bypassaustritts (29) sich kein Teil des Turbopumpabschnitts befindet,
und/oder wobei der Turbopumpabschnitt mehrere in Pumprichtung (P) aufeinanderfolgend angeordnete Turbopumpstufen umfasst und der Bypasseintritt (31) in Höhe einer Turbopumpstufe oder zwischen zwei Turbopumpstufen, gelegen ist.

6. Vorrichtung nach einem der vorherigen Ansprüche, wobei der zwischen dem Bypassaustritt (29) und dem Bypasseintritt (31) gelegene Teil (18b, 18c) des Turbopumpabschnitts zur Erzielung einer höheren Kompression und/oder eines höheren Saugvermögens ausgelegt ist als ein stromaufwärts des Bypasseintritts (31) gelegener Teil (18a) des Turbopumpabschnitts.

7. Vorrichtung nach einem der vorherigen Ansprüche, wobei die Turbovakuumpumpe ausschließlich über einen axialen Saugeinlass (23) an den Detektor (19) angeschlossen ist, und wobei der Bypass (27) von einem Bypassaustritt (29 direkt in den Detektor (19) führt, insbesondere wobei der Bypassaustritt (29) in Höhe einer Turbopumpstufe (17a) oder zwischen zwei Turbopumpstufen (17a, 17b) gelegen ist oder axial einen Zwischenraum zwischen zwei Turbopumpstufen und einen Teil zumindest einer der den Zwischenraum begrenzenden Turbopumpstufen abdeckt.

8. Vorrichtung nach einem der Ansprüche 1 bis 6, wobei die Turbovakuumpumpe (15) über mehrere in Pumprichtung (P) beabstandete radiale Saugeinlässe (23) oder über einen axialen Saugeinlass (23) und einen oder mehrere in Pumprichtung (P) beabstandete radiale Saugeinlässe (23) an den Detektor (19) angeschlossen ist, wobei der Bypasseintritt (31) in Höhe einer Turbopumpstufe oder zwischen zwei Turbopumpstufen (18a, 18b) gelegen ist oder axial einen Zwischenraum zwischen zwei Turbopumpstufen und einen Teil zumindest einer der den Zwischenraum begrenzenden Turbopumpstufen abdeckt.

9. Vorrichtung nach Anspruch 8, wobei ein zwischen dem Bypassaustritt (29) und einem dem Bypassaustritt (29) stromaufwärts am nächsten gelegenen radialen Saugeinlass (23) befindlicher Teil (18c) des Turbopumpabschnitts zur Erzielung einer höheren Kompression und/oder eines höheren Saugvermögens ausgelegt ist als jeder weiter stromaufwärts gelegene Teil (18a, 18b) des Turbopumpabschnitts, der zwischen dem dem Bypassaustritt (29) stromaufwärts am nächsten gelegenen radialen Saugeinlass (23) und dem Bypasseintritt (31) oder stromaufwärts des Bypasseintritts (31) gelegen ist.

10. Vorrichtung nach einem der Ansprüche 2 bis 9, wobei der Bypass (27, 28) zumindest eine Gasleitung (37) umfasst und die Einstelleinrichtung wenigstens ein mittels der Steuereinrichtung (35) ansteuerbares Bypass-Ventil (33) aufweist, insbesondere ein Magnetventil, dessen Strömungsquerschnitt veränderbar ist, insbesondere wobei der Strömungsquerschnitt für den Evakuiermodus auf einen Wert von Null reduzierbar ist,
insbesondere wobei das Bypass-Ventil (33) in der Gasleitung (37), in der Turbovakuumpumpe (15), insbesondere an oder in einem Pumpengehäuse (16), oder in einer der Turbovakuumpumpe (15) zugeordneten Ventileinheit (14) angeordnet ist.

11. Vorrichtung nach einem der Ansprüche 2 bis 10, wobei der Bypass (27, 28) eine Gasleitung (37), insbesondere eine Kapillare, ohne Ventil umfasst, insbesondere wobei eine Einstelleinrichtung vorgesehen ist, die eine mittels der Steuereinrichtung (35) ansteuerbare Heizeinrichtung für die Gasleitung (37) aufweist, wobei die Heizleistung der Heizeinrichtung zum Verändern des Leitwertes der Gasleitung (37) veränderbar ist.

12. Vorrichtung nach einem der Ansprüche 2 bis 11, wobei der Bypass (27, 28) eine Gasleitung (37), insbesondere ohne Ventil, umfasst und eine Selektionseinrichtung, insbesondere eine Selektionsmembran, vorgesehen ist, die für das Prüfgas passierbar ist, nicht jedoch für ein Fremdgas, insbesondere Stickstoff, das schwerer ist als das Prüfgas,
insbesondere wobei die Selektionseinrichtung in der Gasleitung (37), in der Turbovakuumpumpe (15), insbesondere an oder in einem Pumpengehäuse (16), oder in einer der Turbovakuumpumpe (15) zugeordneten Ventileinheit (14) angeordnet ist.

13. Verfahren zur Lecksuche nach dem Vakuumverfahren im Gegenstromprinzip mittels einer Lecksuchvorrichtung, die eine Vakuumpumpeinheit (11) und einen Detektor (19) umfasst, wobei die Vakuumpumpeinheit (11) an einen zu evakuierenden Prüfgegenstand (13) anschließbar ist und eine Turbovakuumpumpe (15) mit einem Turbopumpabschnitt umfasst, der von einer oder mehreren Turbopumpstufen (17; 18) gebildet ist, insbesondere mittels einer Lecksuchvorrichtung nach einem der vorhergehenden Ansprüche,
**dadurch gekennzeichnet, dass**
für ein vom Prüfgegenstand (13) stammendes, in die Turbovakuumpumpe (15) gelangendes und entgegen der Pumprichtung (P) zum Detektor (19) strömendes Prüfgas (21), insbesondere Helium, zumindest ein Bypass (27, 28) bereitgestellt wird, der unter Umgehung zumindest eines Teils (17a; 18b, 18c) des Turbopumpabschnitts entweder direkt in den Detektor (19) oder zurück in den Turbopumpabschnitt führt.

14. Verfahren nach Anspruch 13, bei dem der auf das Prüfgas (21) bezogene Leitwert des Bypasses (27, 28) während des Betriebs der Lecksuchvorrichtung von einem relativ höheren Wert für eines Prüfmodus, in welchem das Prüfgas (21) mittels des Detektors (19) nachgewiesen wird, auf einen relativ niedrigeren Wert für einen Evakuiermodus geändert wird, in welchem der Detektor (19) evakuiert wird,
und/oder wobei nach dem Evakuieren des Detektors (19) der Leitwert des Bypasses (27, 28) wieder zurück auf einen relativ höheren Wert geändert wird, um die Lecksuchvorrichtung wieder im Prüfmodus zu betreiben, und/oder wobei von dem Prüfmodus in den Evakuiermodus gewechselt wird, wenn der Gasdruck innerhalb des Detektors (19) einen vorgegebenen Wert übersteigt.

15. Verfahren nach Anspruch 13 oder 14, wobei der Leitwert des Bypasses (27, 28) durch Verändern des Strömungsquerschnitts eines Bypass-Ventils (33) verändert wird, insbesondere wobei für den Evakuiermodus das Bypass-Ventil (33) vollständig geschlossen wird,
und/oder wobei der Leitwert des Bypasses (27, 28) durch Erwärmen und Kühlen einer Gasleitung (37) für das Prüfgas (21) verändert wird, insbesondere einer Kapillare.

## Claims

1. An apparatus for leak detection according to the vacuum method using the counterflow principle, said apparatus comprising
a vacuum pump unit (11) which can be connected to a test object (13) to be evacuated and which comprises a turbovacuum pump (15) comprising a turbopump section which is formed by one or more turbopump stages (17; 18), and
a detector (19), in particular a mass spectrometer, for detecting a test gas (21), in particular helium,
wherein the turbovacuum pump (15) is connected to the detector (19) via at least one axial and/or radial suction inlet (23) and has a test gas inlet (25) downstream of the suction inlet (23), and
wherein at least a part of the turbopump section is located between the suction inlet (23) and the test gas inlet (25) in the pumping direction (P) of the turbovacuum pump (15),
**characterized in that**
at least one bypass (27, 28) is provided for the test gas (21) and leads from a bypass outlet (29), which is disposed at the level of the test gas inlet (25) or upstream of the test gas inlet (25), out of the turbopump section directly into the detector (19) or to a bypass inlet (31), which is disposed upstream of the bypass outlet (29), into the turbopump section and bypasses at least a part (17a; 18b, 18c) of the turbopump section in so doing.

2. An apparatus according to claim 1, further comprising a setting device (33) for changing the conductance of the bypass (27, 28) that is related to the test gas (21), wherein the setting device (33) can be controlled by means of a control device (35) of the apparatus to change the conductance between a relatively higher value and a relatively lower value in dependence on the operating conditions of the apparatus.

3. An apparatus according to claim 1 or 2, wherein at least two bypasses (27a, 27b) are provided for the test gas (21), and wherein the bypasses (27a, 27b) exit from the turbopump section at different positions and/or lead into the detector (19) or into the turbopump section at different positions,
in particular wherein the bypasses (27a, 27b) bypass parts of the turbopump section that are configured to achieve differently high compressions and/or pumping speeds, and/or wherein the conductances of the bypasses (27a, 27b) can be varied independently of one another.

4. An apparatus according to any one of the preceding claims, wherein the turbopump section comprises a plurality of turbopump stages arranged following one another in the pumping direction (P) and the test gas inlet (25) is disposed downstream of a turbopump stage, in particular between two turbopump stages, and/or wherein the turbopump section comprises a plurality of turbopump stages arranged following one another in the pumping direction (P) and the bypass outlet (29) is disposed at the level of a turbopump stage or downstream of a turbopump stage, in particular between two turbopump stages.

5. An apparatus according to any one of the preceding claims, wherein the test gas inlet (25) and the bypass outlet (29) are disposed axially at least substantially at the same level, in particular between two turbopump stages (18c, 18d), so that no part of the turbopump section is located between the axial height of the test gas inlet (25) and the axial height of the bypass outlet (29),
and/or wherein the turbopump section comprises a plurality of turbopump stages arranged following one another in the pumping direction (P) and the bypass inlet (31) is disposed at the level of a turbopump stage or between two turbopump stages.

6. An apparatus according to any one of the preceding claims, wherein the part (18b, 18c) of the turbopump section that is disposed between the bypass outlet (29) and the bypass inlet (31) is adapted to achieve a higher compression and/or a higher pumping speed than a part (18a) of the turbopump section that is disposed upstream of the bypass inlet (31).

7. An apparatus according to any one of the preceding claims, wherein the turbovacuum pump is connected to the detector (19) only via an axial suction inlet (23), and wherein the bypass (27) leads from a bypass outlet (29) directly into the detector (19), in particular wherein the bypass outlet (29) is disposed at the level of a turbopump stage (17a) or between two turbopump stages (17a, 17b) or axially covers an intermediate space between two turbopump stages and a part of at least one of the turbopump stages bounding the intermediate space.

8. An apparatus according to any one of the claims 1 to 6, wherein the turbovacuum pump (15) is connected to the detector (19) via a plurality of radial suction inlets (23) spaced apart in the pumping direction (P) or via an axial suction inlet (23) and one or more radial suction inlets (23) spaced apart in the pumping direction (P), wherein the bypass inlet (31) is disposed at the level of a turbopump stage or between two turbopump stages (18a, 18b) or axially covers an intermediate space between two turbopump stages and a part of at least one of the turbopump stages bounding the intermediate space.

9. An apparatus according to claim 8, wherein a part (18c) of the turbopump section located between the bypass outlet (29) and a radial suction inlet (23) disposed the closest upstream of the bypass outlet (29) is adapted to achieve a higher compression and/or a higher pumping speed than each part (18a, 18b) of the turbopump section that is disposed further upstream and that is disposed between the radial suction inlet (23) disposed the closest upstream of the bypass outlet (29) and the bypass inlet (31) or upstream of the bypass inlet (31).

10. An apparatus according to any one of the claims 2 to 9, wherein the bypass (27, 28) comprises at least one gas line (37) and the setting device has at least one bypass valve (33), in particular a solenoid valve, which can be controlled by means of the control device (35) and whose flow cross-section can be changed, in particular wherein the flow cross-section can be reduced to a value of zero for the evacuation mode,
in particular wherein the bypass valve (33) is arranged in the gas line (37), in the turbovacuum pump (15), in particular at or in a pump housing (16), or in a valve unit (14) associated with the turbovacuum pump (15).

11. An apparatus according to any one of the claims 2 to 10, wherein the bypass (27, 28) comprises a gas line (37), in particular a capillary, without a valve, in particular wherein a setting device is provided that has a heating device for the gas line (37), which heating device can be controlled by means of the control device (35), wherein the heating power of the heating device can be changed to change the conductance of the gas line (37).

12. An apparatus according to any one of the claims 2 to 11, wherein the bypass (27, 28) comprises a gas line (37), in particular without a valve, and a selection device, in particular a selection membrane, is provided that can be passed through by the test gas, but not by a carrier gas, in particular nitrogen, which is heavier than the test gas,
in particular wherein the selection device is arranged in the gas line (37), in the turbovacuum pump (15), in particular at or in a pump housing (16), or in a valve unit (14) associated with the turbovacuum pump (15).

13. A method for leak detection according to the vacuum method using the counterflow principle by means of a leak detection apparatus which comprises a vacuum pump unit (11) and a detector (19), wherein the vacuum pump unit (11) can be connected to a test object (13) to be evacuated and comprises a turbovacuum pump (15) comprising a turbopump section which is formed by one or more turbopump stages (17; 18), in particular by means of a leak detection apparatus according to any one of the preceding claims,
**characterized in that**
at least one bypass (27, 28) is provided for a test gas (21), in particular helium, which originates from the test object (13), which enters the turbovacuum pump (15) and which flows against the pumping direction (P) to the detector (19), and leads either directly into the detector (19) or back into the turbopump section while bypassing at least a part (17a; 18b, 18c) of the turbopump section.

14. A method according to claim 13, in which the conductance of the bypass (27, 28) related to the test gas (21) is changed during the operation of the leak detection apparatus from a relatively higher value for a test mode, in which the test gas (21) is detected by means of the detector (19), to a relatively lower value for an evacuation mode in which the detector (19) is evacuated,
and/or wherein, after the evacuation of the detector (19), the conductance of the bypass (27, 28) is changed back to a relatively higher value again in order to operate the leak detection apparatus in the test mode again,
and/or wherein a switch is made from the test mode to the evacuation mode when the gas pressure within the detector (19) exceeds a predefined value.

15. A method according to claim 13 or 14, wherein the conductance of the bypass (27, 28) is changed by changing the flow cross-section of a bypass valve (33), in particular wherein the bypass valve (33) is completely closed for the evacuation mode,
and/or wherein the conductance of the bypass (27, 28) is changed by heating and cooling a gas line (37) for the test gas (21), in particular a capillary.

## Revendications

1. Dispositif de détection de fuites selon le principe du vide à contre-courant, comprenant une unité de pompe à vide (11) qui peut être raccordée à un échantillon (13) à mettre sous vide et qui comprend une pompe à vide turbomoléculaire (15) munie d'une portion de pompe turbomoléculaire formée par un ou plusieurs étages de pompe turbomoléculaire (17 ; 18), et comprenant un détecteur (19), en particulier un spectromètre de masse, pour mettre en évidence un gaz témoin (21), en particulier de l'hélium,
la pompe à vide turbomoléculaire (15) étant raccordée au détecteur (19) par l'intermédiaire d'au moins une entrée d'aspiration axiale et/ou radiale (23) et présentant, en aval de l'entrée d'aspiration (23), une entrée de gaz témoin (25), et
au moins une partie de la portion de pompe turbomoléculaire étant située entre l'entrée d'aspiration (23) et l'entrée de gaz témoin (25) dans le sens de pompage (P) de la pompe à vide turbomoléculaire (15),
**caractérisé en ce que**
il est prévu au moins une dérivation (27, 28) pour le gaz témoin (21), laquelle mène depuis une sortie de dérivation (29), située au niveau de l'entrée de gaz témoin (25) ou en amont de l'entrée de gaz témoin (25), hors de la portion de pompe turbomoléculaire, directement dans le détecteur (19) ou vers une entrée de dérivation (31), située en amont de la sortie de dérivation (29), dans la portion de pompe turbomoléculaire, et qui contourne au moins une partie (17a ; 18b, 18c) de la portion de pompe turbomoléculaire.

2. Dispositif selon la revendication 1,
comprenant en outre un moyen de réglage (33) pour modifier la conductance de la dérivation (27, 28) relative au gaz témoin (21), le moyen de réglage (33) pouvant être commandé à l'aide d'un moyen de commande (35) du dispositif afin de modifier la conductance entre une valeur relativement plus élevée et une valeur relativement plus faible en fonction des conditions de fonctionnement du dispositif.

3. Dispositif selon la revendication 1 ou 2,
dans lequel sont prévues au moins deux dérivations (27a, 27b) pour le gaz témoin (21), les dérivations (27a, 27b) sortant de la portion de pompe turbomoléculaire à différents endroits et/ou menant dans le détecteur (19) ou dans la portion de pompe turbomoléculaire à différents endroits,
en particulier, les dérivations (27a, 27b) contournent des parties de la portion de pompe turbomoléculaire qui sont conçues pour obtenir des compressions et/ou des capacités d'aspiration de différents niveaux, et/ou les conductances des dérivations (27a, 27b) peuvent être modifiées indépendamment l'une de l'autre.

4. Dispositif selon l'une des revendications précédentes,
dans lequel la portion de pompe turbomoléculaire comprend plusieurs étages de pompe turbomoléculaire disposés successivement dans le sens de pompage (P), et l'entrée de gaz témoin (25) est située en aval d'un étage de pompe turbomoléculaire, en particulier entre deux étages de pompe turbomoléculaire, et/ou
la portion de pompe turbomoléculaire comprend plusieurs étages de pompe turbomoléculaire disposés successivement dans le sens de pompage (P), et la sortie de dérivation (29) est située au niveau d'un étage de pompe turbomoléculaire ou en aval d'un étage de pompe turbomoléculaire, en particulier entre deux étages de pompe turbomoléculaire.

5. Dispositif selon l'une des revendications précédentes,
dans lequel l'entrée de gaz témoin (25) et la sortie de dérivation (29) sont situées axialement au moins sensiblement au même niveau, en particulier entre deux étages de pompe turbomoléculaire (18c, 18d), de sorte qu'aucune partie de la portion de pompe turbomoléculaire ne se trouve entre le niveau axial de l'entrée de gaz témoin (25) et le niveau axial de la sortie de dérivation (29),
et/ou la portion de pompe turbomoléculaire comprend plusieurs étages de pompe turbomoléculaire disposés successivement dans le sens de pompage (P), et l'entrée de dérivation (31) est située au niveau d'un étage de pompe turbomoléculaire ou entre deux étages de pompe turbomoléculaire.

6. Dispositif selon l'une des revendications précédentes,
dans lequel la partie (18b, 18c) de la portion de pompe turbomoléculaire située entre la sortie de dérivation (29) et l'entrée de dérivation (31) est conçue pour obtenir une compression plus élevée et/ou une capacité d'aspiration plus élevée que celle d'une partie (18a) de la portion de pompe turbomoléculaire située en amont de l'entrée de dérivation (31).

7. Dispositif selon l'une des revendications précédentes,
dans lequel la pompe à vide turbomoléculaire est raccordée au détecteur (19) exclusivement par l'intermédiaire d'une entrée d'aspiration axiale (23), et la dérivation (27) mène directement dans le détecteur (19) depuis une sortie de dérivation (29),
en particulier, la sortie de dérivation (29) est située au niveau d'un étage de pompe turbomoléculaire (17a) ou entre deux étages de pompe turbomoléculaire (17a) ou recouvre axialement un espace intermédiaire, situé entre deux étages de pompe turbomoléculaire, et une partie de l'un au moins des étages de pompe turbomoléculaire qui délimitent l'espace intermédiaire.

8. Dispositif selon l'une des revendications 1 à 6,
dans lequel la pompe à vide turbomoléculaire (15) est raccordée au détecteur (19) par l'intermédiaire de plusieurs entrées d'aspiration radiales (23) espacées dans le sens de pompage (P) ou par l'intermédiaire d'une entrée d'aspiration axiale (23) et d'une ou plusieurs entrées d'aspiration radiales (23) espacées dans le sens de pompage (P), et
l'entrée de dérivation (31) est située au niveau d'un étage de pompe turbomoléculaire ou entre deux étages de pompe turbomoléculaire (18a, 18b) ou recouvre axialement un espace intermédiaire, situé entre deux étages de pompe turbomoléculaire, et une partie de l'un au moins des étages de pompe turbomoléculaire qui délimitent l'espace intermédiaire.

9. Dispositif selon la revendication 8,
dans lequel une partie (18c) de la portion de pompe turbomoléculaire située entre la sortie de dérivation (29) et une entrée d'aspiration radiale (23) la plus proche en amont de la sortie de dérivation (29) est conçue pour obtenir une compression plus élevée et/ou une capacité d'aspiration plus élevée que celle de toute partie (18a, 18b) de la portion de pompe turbomoléculaire située plus en amont, qui se trouve entre l'entrée d'aspiration radiale (23) la plus proche en amont de la sortie de dérivation (29) et l'entrée de dérivation (31) ou en amont de l'entrée de dérivation (31).

10. Dispositif selon l'une des revendications 2 à 9,
dans lequel la dérivation (27, 28) comprend au moins une conduite de gaz (37), et le moyen de réglage comporte au moins une vanne de dérivation (33) apte à être commandée par le moyen de commande (35), en particulier une électrovanne dont la section d'écoulement est variable, en particulier la section d'écoulement pouvant être réduite à une valeur nulle pour le mode de mise sous vide,
en particulier, la vanne de dérivation (33) est disposée dans la conduite de gaz (37), dans la pompe à vide turbomoléculaire (15), en particulier sur ou dans un carter de pompe (16), ou dans une unité de vanne (14) associée à la pompe à vide turbomoléculaire (15).

11. Dispositif selon l'une des revendications 2 à 10,
dans lequel la dérivation (27, 28) comprend une conduite de gaz (37), en particulier un capillaire, sans vanne,
en particulier, **il** est prévu un moyen de réglage qui comprend un moyen de chauffage de la conduite de gaz (37) apte à être commandé par le moyen de commande (35), la puissance de chauffage du moyen de chauffage étant variable pour modifier la conductance de la conduite de gaz (37).

12. Dispositif selon l'une des revendications 2 à 11,
dans lequel la dérivation (27, 28) comprend une conduite de gaz (37), en particulier sans vanne, et
il est prévu un moyen de sélection, en particulier une membrane de sélection, qui est perméable au gaz témoin, mais non pas perméable à un gaz étranger, en particulier l'azote, qui est plus lourd que le gaz témoin,
en particulier, le moyen de sélection est disposé dans la conduite de gaz (37), dans la pompe à vide turbomoléculaire (15), en particulier sur ou dans un carter de pompe (16), ou dans une unité de vanne (14) associée à la pompe à vide turbomoléculaire (15).

13. Procédé de détection de fuites selon le principe du vide à contre-courant à l'aide d'un dispositif de détection de fuites comprenant une unité de pompe à vide (11) et un détecteur (19), l'unité de pompe à vide (11) pouvant être raccordée à un échantillon (13) à mettre sous vide et comprenant une pompe à vide turbomoléculaire (15) munie d'une portion de pompe turbomoléculaire formée par un ou plusieurs étages de pompe turbomoléculaire (17 ; 18), en particulier à l'aide d'un dispositif de détection de fuites selon l'une des revendications précédentes,
**caractérisé en ce que**
pour un gaz témoin (21), en particulier de l'hélium, provenant de l'échantillon (13), arrivant dans la pompe à vide turbomoléculaire (15) et s'écoulant dans le sens opposé au sens de pompage (P) vers le détecteur (19), il est prévu au moins une dérivation (27, 28) qui, en contournant au moins une partie (17a ; 18b, 18c) de la portion de pompe turbomoléculaire, mène soit directement dans le détecteur (19), soit en retour dans la portion de pompe turbomoléculaire.

14. Procédé selon la revendication 13,
dans lequel la conductance de la dérivation (27, 28) relative au gaz témoin (21) est modifiée pendant le fonctionnement du dispositif de détection de fuites, passant d'une valeur relativement plus élevée pour un mode de test dans lequel le gaz témoin (21) est mis en évidence à l'aide du détecteur (19), à une valeur relativement plus faible pour un mode de mise sous vide dans lequel le détecteur (19) est mis sous vide,
et/ou, après la mise sous vide du détecteur (19), la conductance de la dérivation (27, 28) est à nouveau modifiée pour revenir à une valeur relativement plus élevée afin de faire fonctionner à nouveau le dispositif de détection de fuites en mode de test,
et/ou on passe du mode de test au mode de mise sous vide lorsque la pression de gaz à l'intérieur du détecteur (19) est supérieure à une valeur prédéterminée.

15. Procédé selon la revendication 13 ou 14,
dans lequel la conductance de la dérivation (27, 28) est modifiée en modifiant la section d'écoulement d'une vanne de dérivation (33), en particulier la vanne de dérivation (33) étant complètement fermée pour le mode de mise sous vide,
et/ou la conductance de la dérivation (27, 28) est modifiée par le chauffage et le refroidissement d'une conduite de gaz (37), en particulier d'un capillaire, pour le gaz témoin (21).
